# EUROPÄISCHE PATENTSCHRIFT

(11) **EP 2 904 951 B1**
(45) Veröffentlichungstag und Bekanntmachung des Hinweises auf die Patenterteilung: **16.11.2016**
(21) Anmeldenummer: 14154110.2
(22) Anmeldetag: 06.02.2014
(51) Int. Cl.: A47J 31/36

(54) **System zur Zubereitung eines Brüherzeugnisses**
System for preparing a brewed product
Système de préparation d'un produit ébouillanté

(43) Veröffentlichungstag der Anmeldung: 12.08.2015
(73) Patentinhaber: Qbo Coffee GmbH, 8304 Wallisellen (CH)
(72) Erfinder: Deuber, Louis, 8805 Richterswil (CH); Ternité, Rüdiger, 21149 Hamburg (DE)
(74) Vertreter: Frei Patent Attorneys

(56) Entgegenhaltungen:
- EP-A1- 2 196 407
- EP-A1- 2 452 894
- EP-A1- 2 647 317
- WO-A1-2009/013777
- WO-A1-2010/149496

## Beschreibung

Die Erfindung betrifft ein System zur Zubereitung eines Brüherzeugnisses mit einer ein Extraktionsgut enthaltenden Portionskapsel und einem Extraktionsgerät zur Zubereitung des Brüherzeugnisses aus dem in der Portionskapsel enthaltenen Extraktionsgut, wobei das Extraktionsgerät eine Injektionseinrichtung zum Einleiten einer Brühflüssigkeit in die Portionskapsel und eine Extraktionseinrichtung zum Ausleiten eines Extraktionsprodukts aus der Portionskapsel umfasst, wobei die Injektionseinrichtung und die Extraktionseinrichtung zwischen sich einen Aufnahmeraum für die Portionskapsel definieren und zum Einsetzen der Kapsel in den Aufnahmeraum relativ auseinander bewegbar und zum Fixieren der Kapsel relativ aufeinander zu bewegbar sind.

Ein derartiges System ist grundsätzlich bekannt, beispielsweise aus der EP 2 647 317 A1, und wird insbesondere zur Zubereitung von Kaffee verwendet. Auch die WO 2009/013777 A1, die EP 2 452 894 A1 und die WO 2010/149496 A1 zeigen solche Systeme.

Die EP 2 196 407 A1 lehrt eine Portionskapsel mit einem flexibel ausgestalteten Boden, welcher durch einen Stempel der Extraktionseinrichtung nach innen gedrückt wird.

Der Erfindung liegt die Aufgabe zugrunde, ein System zu schaffen, welches die Zubereitung eines besseren Brüherzeugnisses ermöglicht und insbesondere zu einem Kaffee höherer Qualität in der Tasse führt.

Die Aufgabe wird durch ein System mit den Merkmalen des Anspruchs 1 gelöst. Der Erfindung liegt der allgemeine Gedanke zugrunde, die Portionskapsel vor der Durchführung des eigentlichen Brühvorgangs zu komprimieren und das darin enthaltene Extraktionsgut zu kompaktieren. Eine zweite Kompression der Portionskapsel kann zusätzlich während des Brühvorgangs erfolgen, wenn die Portionskapsel injektionsseitig mit unter Druck stehender Brühflüssigkeit beaufschlagt wird. Die Kompaktierung des Extraktionsguts vor dem Brühvorgang, welche bei Siebträgermaschinen zur Kaffeezubereitung gemeinhin als "Tampern" bezeichnet wird, resultiert bekanntermaßen in einer deutlich verbesserten Qualität des Brüherzeugnisses. Das kompaktierte Kaffeemehl bietet dem Wasser einen über das gesamte Kapselvolumen hinweg gleichmäßigen, hohen Widerstand, so dass alle Bereiche der Kapsel gleichmäßig durchströmt werden, und sich die Durchflussrate des Wassers im Gegensatz zu einem nicht komprimierten Kaffee verringert, während der Druck sich erhöht. Dadurch erhält man zum einen eine verbesserte Extraktion der Aromen, zum anderen aufgrund des höheren Drucks eine bessere Crema, wie sie insbesondere bei Espresso-artigen Kaffeegetränken erwünscht ist. Bei einem horizontalen Brühprozess, bei dem eine Portionskapsel nicht von oben nach unten, sondern in horizontaler Richtung durchströmt wird, dient das erfindungsgemässe Komprimieren der Kapsel und des darin liegenden Extraktionsgutes zudem dazu, durch die Schwerkraft bedingte Unregelmäßigkeiten in der Verteilung des Extraktionsgutes in der Kapsel auszugleichen. Es wird insbesondere vermieden, dass sich oben in der Kapsel ein geringerer Strömungswiderstand einstellt, weil das Extraktionsgut sich unten in der Kapsel ansammelt. Dieser Effekt ist ein bekanntes Problem bei der Portionskapsel, die in dem erfindungsgemäßen System verwendet wird, da diese einen gewölbten Deckel aufweist, in dem sich kein Extraktionsgut befindet, das heißt die Kapsel ist nicht vollständig gefüllt, sondern weist einen Leerraum auf. Dadurch, dass die Kompression der Portionskapsel erfindungsgemäß von der Extraktionsseite her erfolgt, lässt sich die Kompaktierung des Extraktionsguts unabhängig von der Injektion der Brühflüssigkeit in die Portionskapsel einstellen, das heißt die Kompaktierung des Extraktionsguts einerseits und die Injektion der Brühflüssigkeit andererseits lassen sich getrennt voneinander optimieren, wodurch letztlich eine bestmögliche Qualität des Brüherzeugnisses erreicht werden kann.

Vorteilhafte Ausbildungen der Erfindung sind den Unteransprüchen, der Beschreibung und der Zeichnung zu entnehmen.

Gemäß einer Ausführungsform ist das Druckmittel ein passives Bauteil, welches die Wand der Portionskapsel eindrückt, wenn die Injektionseinrichtung und die Extraktionseinrichtung zum Fixieren der Kapsel aufeinander zu bewegt werden. Das Druckmittel braucht also nicht separat angesteuert zu werden, sondern es wirkt selbsttätig bzw. automatisch, wenn die Portionskapsel in dem Aufnahmeraum fixiert wird.

Insbesondere umfasst das Druckmittel wenigstens einen Extraktionsdorn der Extraktionseinrichtung. Der Extraktionsdorn erfüllt eine Doppelfunktion, indem er einerseits die Portionskapsel komprimiert und das darin enthaltene Extraktionsgut kompaktiert und andererseits für eine Ausleitung des Extraktionsprodukts aus der Portionskapsel sorgt. Diese Doppelfunktion des Extraktionsdorns trägt zu einer einfacheren und kostengünstigeren Bauform des Extraktionsgeräts bei.

Der Extraktionsdorn kann beispielsweise eine pyramiden- oder kegelförmige Grundform besitzen und eine Mantelfläche aufweisen, die sich von einem Basiselement zu einer der Injektionseinrichtung zugewandten Spitze des Extraktionsdorns erstreckt.

Bevorzugt weist der Extraktionsdorn eine Verbreiterung, insbesondere eine Schulter, im Bereich seiner Spitze auf. Die Verbreiterung trägt dazu bei, dass der Extraktionsdorn nicht einfach nur die der Extraktionseinrichtung zugewandte Wand der Portionskapsel durchsticht und glatt in die Portionskapsel eindringt, sondern sich mit der Verbreiterung vielmehr an der Wand der Portionskapsel abstützt, um diese um ein gewünschtes Maß nach innen zu versetzen, d.h. also zur Kompaktierung des Extraktionsguts einzudrücken.

Beispielsweise kann der Extraktionsdorn mindestens eine vorspringende Rippe aufweisen, die sich von dem Basiselement aus entlang der Mantelfläche in Richtung der Spitze erstreckt, wobei bevorzugt mindestens drei solcher Rippen um die Mantelfläche herum gleich verteilt angeordnet sind. Vorteilhafterweise endet die oder jede Rippe in einem Abstand zu der Spitze.

Die Rippen erfüllen ihrerseits eine Doppelfunktion, indem sie nicht nur die voranstehend erwähnte Verbreiterung des Extraktionsdorns bilden, welche zu einer verbesserten Kompaktierung des Extraktionsguts führt, sondern darüber hinaus auch für eine verbesserte Ausleitung des Extraktionsprodukts aus der Portionskapsel sorgen. Während des Brühvorgangs baut sich durch die Injektion von Brühflüssigkeit in die Portionskapsel nämlich ein Überdruck in der Portionskapsel auf, durch welchen die der Extraktionseinrichtung zugewandte Kapselwand in Richtung der Extraktionseinrichtung gedrängt wird und sich an die Mantelfläche des Extraktionsdorns anschmiegt. Die Rippen des Extraktionsdorns tragen in dieser Situation dazu bei, dass kleine Ausleitöffnungen in der Kapselwand erhalten bleiben, durch welche das Extraktionsprodukt aus der Portionskapsel ausgeleitet werden kann.

Zum Abführen des Extraktionsprodukts ist vorteilhafterweise im Bereich der oder jeder Rippe eine Durchleitöffnung in dem Basiselement vorgesehen. Beispielsweise kann auch beidseitig der oder jeder Rippe jeweils eine Durchleitöffnung vorgesehen sein.

Die Ausleitung des Extraktionsprodukts aus der Portionskapsel lässt sich darüber hinaus noch weiter verbessern, wenn ein in eine Durchleitöffnung mündender Kanal, z.B. in Form einer Rille, entlang der oder jeder Rippe verläuft, durch welchen das Extraktionsgut kontrolliert abfließen kann. Vorteilhafterweise verläuft beidseitig der oder jeder Rippe jeweils ein in eine Durchleitöffnung mündender Kanal.

Um die Kompaktierung des in der Portionskapsel enthaltenen Extraktionsguts und die Ausleitung des Extraktionsprodukts während des Brühvorgangs gleichermaßen zu optimieren, umfasst das Druckmittel bevorzugt fünf Extraktionsdorne. Beispielsweise können vier dieser Extraktionsdorne in den Ecken eines Quadrats angeordnet sein, während ein fünfter im Zentrum des Quadrats platziert ist. Ein derart ausgebildetes Druckmittel eignet sich besonders gut zum Eindrücken der Wand einer würfel- oder quaderförmigen Portionskapsel. Bevorzugt weist eine passende Portionskapsel deshalb eine im Wesentlichen kubische oder quaderförmige Grundform auf. Unabhängig von der Geometrie der Kapsel ist ein in Bezug auf die Kapsel mittig angeordnetes Druckmittel, wie beispielsweise ein in etwa im Zentrum platzierter Extraktionsdorn oder eine Gruppe von im Zentrum platzierten Extraktionsdornen, besonders gut geeignet, um ein effizientes Eindrücken der Kapsel und Kompaktieren des Extraktionsgutes zu erreichen.

Dabei ist es von Vorteil, wenn die Anordnung der Extraktionsdorne an die Größe der Portionskapsel angepasst ist, insbesondere derart, dass die Diagonalen des durch die Extraktionsdorne aufgespannten Quadrats kürzer sind als eine maximale Diagonale oder ein maximaler Durchmesser der zur Extraktionseinrichtung weisenden Wand der Portionskapsel.

Gemäß einer besonders bevorzugten Ausführungsform ist zumindest die der Extraktionseinrichtung zugewandte Wand der Portionskapsel aus einem Kunststoffmaterial gebildet. Das Kunststoffmaterial der der Extraktionseinrichtung zugewandten Wand sollte dabei so beschaffen sein, dass es von den Extraktionsdornen zwar durchstochen werden kann, dabei aber nicht einreißt, sondern den Extraktionsdornen genügend Widerstand bietet, dass die zur Extraktionseinrichtung weisende Kapselwand zur Kompaktierung des in der Portionskapsel enthaltenen Extraktionsguts ausreichend eingedrückt werden kann.

Eine besonders einfache und kostengünstige Herstellung der Portionskapsel lässt sich außerdem erreichen, wenn alle Wände der Portionskapsel aus einem und bevorzugt aus demselben Kunststoffmaterial gebildet sind. Ein geeignetes Kunststoffmaterial ist beispielsweise Polypropylen, z.B. mit einer Wandstärke im Bereich von 0,1 mm bis 0,7 mm.

Vorzugsweise weist das Kunststoffmaterial eine Sperrschicht auf, welche als Sauerstoffbarriere dient, und damit einen Aromaschutz für den Inhalt der Kapsel gewährleistet. Als Material für eine solche Sperrschicht kommt beispielsweise ein Ethylen-Vinylalkohol-Copolymer (EVOH) in Frage.

Eine solche Portionskapsel lässt sich beispielsweise herstellen, indem ein fünfseitiger, an einer sechsten Seite offener Polyeder-Grundkörper durch Tiefziehen gebildet wird, der Grundkörper mit Extraktionsgut befüllt wird und anschließend die offene sechste Seite durch einen Deckel verschlossen wird, welcher mit dem Grundkörper beispielsweise verschweißt oder verklebt wird. Alternativ kann ein solcher Polyeder-Grundkörper auch in einem Spritzgussverfahren hergestellt werden.

Der Deckel kann entweder in einem Spritzgussverfahren, oder in einem Tiefziehverfahren hergestellt werden, wobei sich das Tiefziehverfahren aufgrund der geringen Tiefe des Deckels dann einem Prägeverfahren annähert.

Insbesondere für die der Extraktionseinrichtung zugewandte Wand, d.h. den Deckel bei dem gerade beschriebenen Aufbau, werden die Ausgangsmaterialien und die Prozessparameter derart gewählt, dass das oben beschriebene gewünschte Anstechverhalten erzielt wird.

Weiterer Gegenstand der Erfindung ist ein Extraktionsgerät mit den Merkmalen des Anspruchs 13, durch welches sich die voranstehend genannten Vorteile entsprechend erreichen lassen. Bevorzugte Ausführungsformen des Extraktionsgeräts wurden anhand des erfindungsgemäßen Systems voranstehend bereits erläutert.

Noch ein weiterer Gegenstand der Erfindung ist ferner ein Verfahren mit den Merkmalen des Anspruchs 14, durch welches sich die voranstehend genannten Vorteile ebenfalls erreichen lassen.

Nachfolgend wird die Erfindung rein beispielhaft anhand einer möglichen Ausführungsform unter Bezugnahme auf die beigefügte Zeichnung beschrieben. Es zeigen:
- Fig. 1 a, b: Schnitte durch ein Brühmodul eines erfindungsgemäßen Extraktionsgeräts mit darin aufgenommener Portionskapsel vor der Durchführung eines Brühvorgangs, und zwar (a) in einer durch den Mittelpunkt der Portionskapsel verlaufenden Ebene und (b) in einer dazu parallelen, aber weiter außerhalb liegenden Ebene;
- Fig. 2 a - c: verschiedene Ansichten einer Anordnung von Extraktionsdornen einer Extraktionseinrichtung des Brühmoduls von Fig. 1; und
- Fig. 3 a, b: die Schnitte von Fig. 1 nach der Durchführung eines Brühvorgangs.

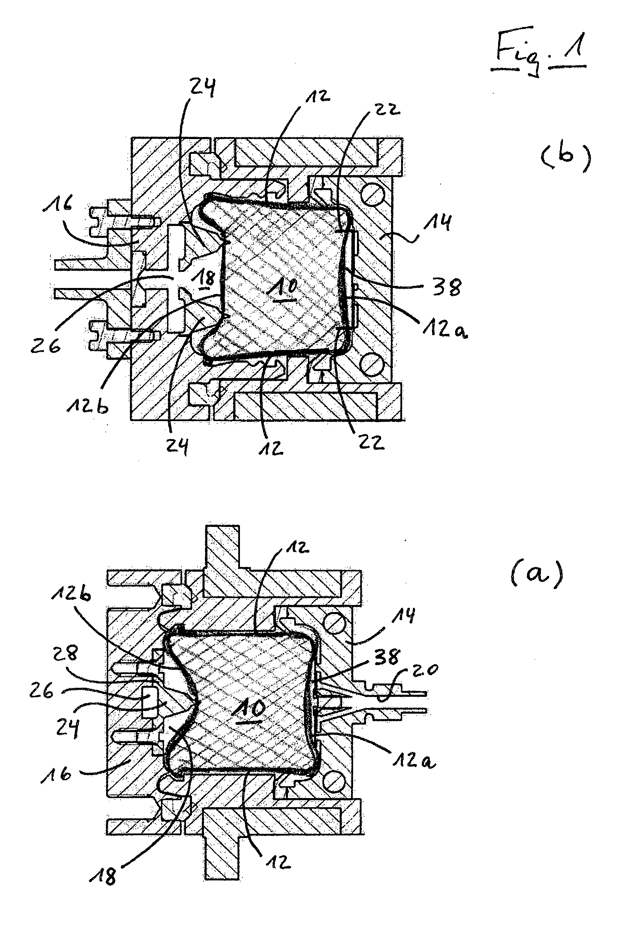

In Fig. 1 ist ein Brühmodul eines Extraktionsgeräts dargestellt, im vorliegenden Ausführungsbeispiel einer Kaffeemaschine, in welchem eine ein Extraktionsgut, hier Kaffeepulver, enthaltende Portionskapsel 10 aufgenommen ist.

Die Portionskapsel 10 weist eine zumindest annähernd kubische Grundform auf und umfasst sechs Kapselwände 12, die aus einem Kunststoffmaterial gebildet sind, hier Polypropylen, und jeweils eine Wandstärke im Bereich von 0,1 mm bis 0,7 mm besitzen. Vor dem Einsetzen der Portionskapsel 10 in das Brühmodul sind die einzelnen Kapselwände 12 zumindest annähernd plan. Aufgrund ihrer geringen Wandstärke und ihrer Ausbildung aus Kunststoffmaterial lassen sich die Kapselwände 12 unter Druck leicht verformen.

Das Brühmodul umfasst eine Injektionseinrichtung 14 zur Einleitung heißer Brühflüssigkeit in die Portionskapsel 10 sowie eine Extraktionseinrichtung 16 zum Ausleiten eines Extraktionsprodukts aus der Portionskapsel 10 während eines Brühvorgangs. Die Injektionseinrichtung 14 und die Extraktionseinrichtung 16 definieren zwischen sich einen Aufnahmeraum 18 für die Portionskapsel 10. Zum Einsetzen einer frischen Portionskapsel 10 in den Aufnahmeraum 18 bzw. zur Entfernung einer verbrauchten Portionskapsel 10 aus dem Aufnahmeraum 18 lassen sich das Brühmodul öffnen und die Injektionseinrichtung 14 und die Extraktionseinrichtung 16 relativ auseinander bewegen, wobei es vorstellbar ist, dass beide Einrichtungen 14, 16 beweglich gelagert sind und tatsächlich bewegt werden oder nur eine der Einrichtungen 14, 16 beweglich gelagert ist und bewegt wird, während die jeweils andere Einrichtung 16, 14 fest verbaut und unbeweglich ist.

Die Injektionseinrichtung 14 umfasst einen zentral angeordneten Zuleitungskanal 20, durch welchen während eines Brühvorgangs Brühflüssigkeit in den Aufnahmeraum 18 eingeleitet wird, sowie mehrere Injektionsdorne 22 zum Einstechen einer der Injektionseinrichtung 14 zugewandten Kapselwand 12a der in dem Aufnahmeraum 18 aufgenommenen Portionskapsel 10, damit die während des Brühvorgangs durch die Injektionseinrichtung 14 zugeführte Brühflüssigkeit in die Portionskapsel 10 eindringen kann.

Entsprechend umfasst die Extraktionseinrichtung 16 mehrere Extraktionsdorne 24 zum Einstechen einer der Extraktionseinrichtung 16 zugewandten Kapselwand 12b der Portionskapsel 10, damit während des Brühvorgangs ein Extraktionsprodukt, hier Kaffee, aus der Portionskapsel 10 austreten und durch einen Ableitungskanal 26 der Extraktionseinrichtung 16 abfließen kann.

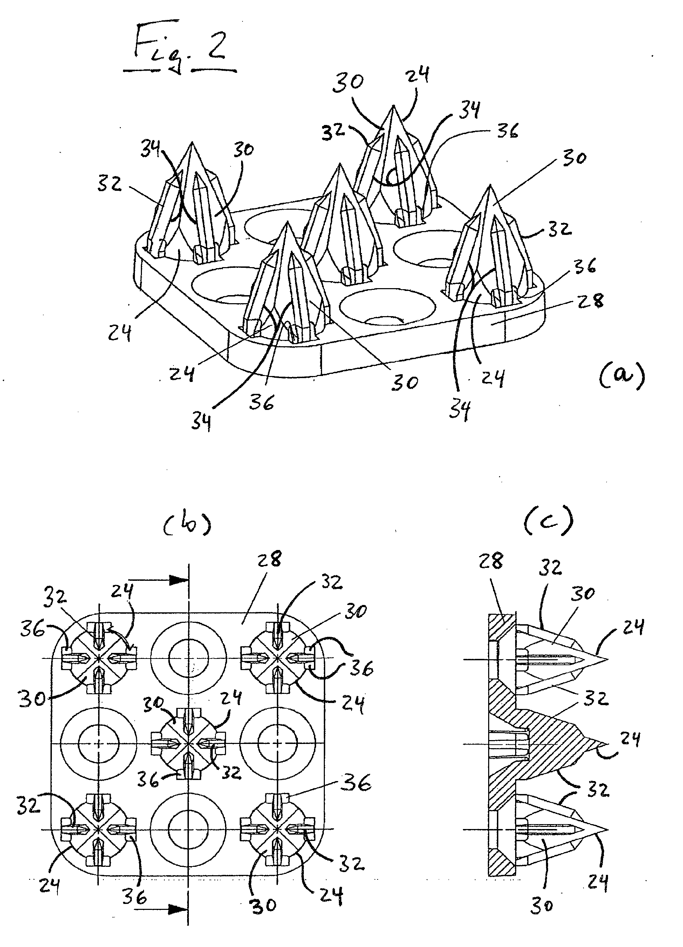

Wie Fig. 2 zeigt, weist die Extraktionseinrichtung 16 fünf Extraktionsdorne 24 auf, von denen vier ein Quadrat aufspannen, in dessen Zentrum der fünfte Extraktionsdorn 24 angeordnet ist. Die Extraktionsdorne 24 gehen aus einem plattenförmigen Basiselement 28 hervor und weisen jeweils eine pyramidale Grundform auf, hier in Form einer vierseitigen Pyramide. Entlang jeder Pyramidenseite 30 erstreckt sich ausgehend von dem Basiselement 28 eine vorspringende Rippe 32 in Richtung der Spitze des Extraktionsdorns 24. Jede Rippe 32 besitzt einen viereckigen Querschnitt, wobei das dem Basiselement 28 abgewandte Ende jeder Rippe 32 spitz zu läuft und in einem Abstand zu der Spitze des Extraktionsdorns 24 endet. Beidseitig jeder Rippe 32 verläuft eine Rille 34, welche in eine Durchleitöffnung 36 mündet, die am Fuße der Rippe 32 in dem Basiselement 28 vorgesehen ist und mit dem Ableitungskanal 26 der Extraktionseinrichtung 16 verbunden ist.

Die Injektionsdorne 22 und die Extraktionsdorne 24 sind derart angeordnet, dass sie eine in den Aufnahmeraum 18 eingesetzte Portionskapsel 10 injektionsseitig bzw. extraktionsseitig einstechen, wenn das Brühmodul geschlossen wird und die Injektionseinrichtung 14 und die Extraktionseinrichtung 16 aufeinander zu bewegt werden. Mit anderen Worten ist ein minimaler Abstand zwischen den Injektionsdornen 22 und den Extraktionsdornen 24 kleiner als der Abstand zwischen den zur Injektionseinrichtung 14 bzw. Extraktionseinrichtung 16 weisenden Kapselwänden 12a, 12b einer frischen, unkomprimierten Portionskapsel 10.

Darüber hinaus ist der minimale Abstand zwischen den Injektionsdornen 22 und den Extraktionsdornen 24 derart bemessen, dass die zur Extraktionseinrichtung 16 weisende Kapselwand 12b nicht nur eingestochen, sondern zusätzlich um ein gewisses Maß in Richtung Kapselinneres eingedrückt wird, wie in Fig. 1 zu erkennen ist. Diese Kompression der Portionskapsel 10 vor der Durchführung des Brühvorgangs bewirkt eine Kompaktierung des in der Portionskapsel 10 enthaltenen Extraktionsguts und führt zu einer spürbaren Verbesserung der Qualität des Brüherzeugnisses, d.h. also des Kaffees, in der Tasse.

Zur Durchführung des Brühvorgangs wird Brühflüssigkeit, z.B. heißes Wasser, unter Druck durch den Zuleitungskanal 20 in den Aufnahmeraum 18 eingeleitet, wodurch es injektionsseitig zu einer zusätzlichen Kompression der Portionskapsel 10 kommt.

Ist der Druck in dem durch die Injektionseinrichtung 14 einerseits und die der Injektionseinrichtung 14 zugewandte Kapselwand 12a andererseits begrenzten Zwischenraum 38 ausreichend groß, dringt die Brühflüssigkeit an den durch die Injektionsdorne 44 geschaffenen Einstichstellen in die Portionskapsel 10 ein. Aufgrund der eindringenden Brühflüssigkeit steigt der Druck in der Portionskapsel 10, und die Portionskapsel 10 dehnt sich aus, bis die seitlichen Kapselwände 12 und die der Extraktionseinrichtung 16 zugewandte Kapselwand 12b an den Aufnahmeraum 18 begrenzenden Wandflächen des Brühmoduls anliegen.

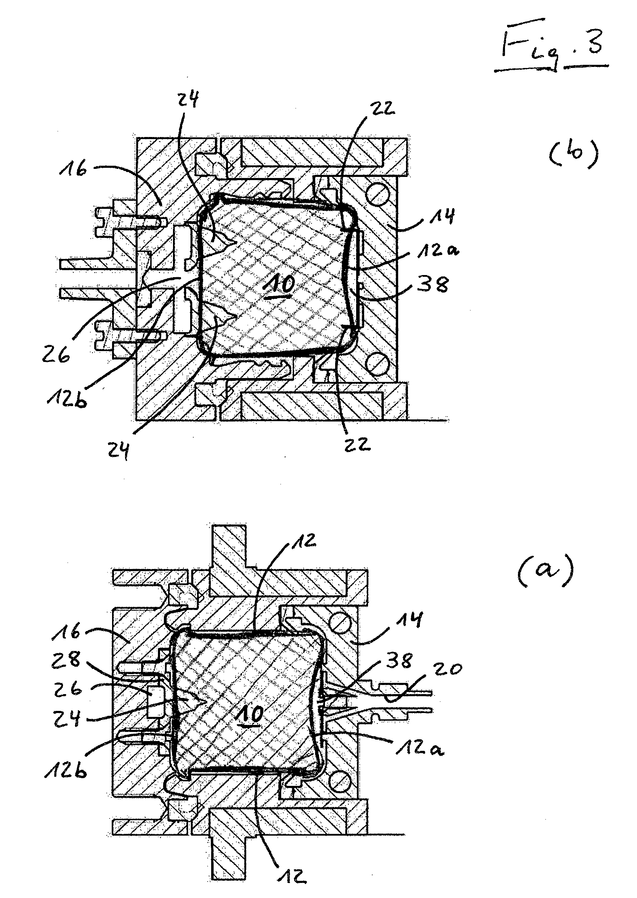

Wie Fig. 3 zeigt, wird dabei insbesondere die der Extraktionseinrichtung 16 zugewandte, zuvor eingedrückte Kapselwand 12b wieder nach außen gedrückt, d.h. also in Richtung der Extraktionseinrichtung 16. Dabei dringen die Extraktionsdorne 24 immer weiter in die Portionskapsel 10 ein, bis die Kapselwand 12b an dem Basiselement 28 der Extraktionseinrichtung 16 anliegt. Das währenddessen durch die Extraktionsdorne 24 verdrängte Material der Kapselwand 12b legt sich dabei an die Pyramidenseiten 30 der Extraktionsdorne 24 an, wodurch die durch die Extraktionsdorne 24 verursachten Einstechöffnungen weitgehend abgedichtet werden.

Lediglich die an den Pyramidenseiten 30 vorgesehenen Rippen 32 sorgen dafür, dass beidseitig jeder Rippe 32 ein gewisser Abstand zwischen Kapselwand 12b und Extraktionsdorn 24 verbleibt. Diese Abstände bilden zusammen mit den entlang den Rippen 32 verlaufenden Rillen 34 Ausleitöffnungen, durch welche das Extraktionsprodukt aus der Portionskapsel 10 austreten kann, wenn der Druck in der Portionskapsel 10 ausreichend stark angestiegen ist. Das aus der Portionskapsel 10 austretende Extraktionsprodukt fließt durch die Rillen 34 an den Extraktionsdornen 24 ab und durch die Durchleitöffnungen 36 des Basiselements 28 in den Ableitungskanal 26 der Extraktionseinrichtung 16 hinein, durch welchen es einer Tasse zugeführt wird.

Werden nach Beendigung des Brühvorgangs das Brühmodul wieder geöffnet und die Injektionseinrichtung 14 und die Extraktionseinrichtung 16 relativ auseinander bewegt, so werden die Injektionsdorne 22 und die Extraktionsdorne 24 aus der Portionskapsel 10 herausgezogen, und die Portionskapsel 10 kann in einen hierfür vorgesehenen Auffangbehälter fallen, um den Aufnahmeraum 18 für eine frische Portionskapsel 10 frei zu machen.

### Bezugszeichenliste

- 10: Portionskapsel
- 12: Kapselwand
- 14: Injektionseinrichtung
- 16: Extraktionseinrichtung
- 18: Aufnahmeraum
- 20: Zuleitungskanal
- 22: Injektionsdorn
- 24: Extraktionsdorn
- 26: Ableitungskanal
- 28: Basiselement
- 30: Pyramidenseite
- 32: Rippe
- 34: Rille
- 36: Durchleitöffnung
- 38: Zwischenraum

## Patentansprüche

1. System zur Zubereitung eines Brüherzeugnisses mit
einer ein Extraktionsgut enthaltenden Portionskapsel (10) und einem Extraktionsgerät zur Zubereitung des Brüherzeugnisses aus dem in der Portionskapsel (10) enthaltenen Extraktionsgut, wobei das Extraktionsgerät eine Injektionseinrichtung (14) zum Einleiten einer Brühflüssigkeit in die Portionskapsel (10) und eine Extraktionseinrichtung (16) zum Ausleiten eines Extraktionsprodukts aus der Portionskapsel (10) umfasst, wobei die Injektionseinrichtung (14) und die Extraktionseinrichtung (16) zwischen sich einen Aufnahmeraum (18) für die Portionskapsel (10) definieren und zum Einsetzen der Portionskapsel (10) in den Aufnahmeraum (18) relativ auseinander bewegbar und zum Fixieren der Portionskapsel (10) relativ aufeinander zu bewegbar sind,
wobei
die Extraktionseinrichtung (16) ein Druckmittel aufweist, durch welches eine der Extraktionseinrichtung (16) zugewandte Wand (12b) der in den Aufnahmeraum (18) eingesetzten Portionskapsel (10) zur Kompaktierung des in der Portionskapsel enthaltenen Extraktionsguts in Richtung Kapselinneres eindrückbar ist, bevor die Injektionseinrichtung (14) Brühflüssigkeit in die Portionskapsel (10) einleitet, **dadurch gekennzeichnet, dass** das Druckmittel wenigstens einen Extraktionsdorn (24) der Extraktionseinrichtung (16) umfasst.

2. System nach Anspruch 1,
**dadurch gekennzeichnet, dass**
das Druckmittel ein passives Bauteil ist, welches die Wand der Portionskapsel (10) eindrückt, wenn die Injektionseinrichtung (14) und die Extraktionseinrichtung (16) zum Fixieren der Portionskapsel (10) aufeinander zu bewegt werden.

3. System nach Anspruch 1 oder 2,
**dadurch gekennzeichnet, dass**
der Extraktionsdorn (24) eine pyramiden- oder kegelförmige Grundform besitzt und eine Mantelfläche aufweist, die sich von einem Basiselement (28) zu einer der Injektionseinrichtung (14) zugewandten Spitze des Extraktionsdorns (24) erstreckt.

4. System nach einem der vorstehenden Ansprüche,
**dadurch gekennzeichnet, dass**
der Extraktionsdorn (24) eine Verbreiterung, insbesondere eine Schulter, im Bereich seiner Spitze aufweist.

5. System nach Anspruch 4,
**dadurch gekennzeichnet, dass**
der Extraktionsdorn (24) mindestens eine vorspringende Rippe (32) aufweist, die sich von dem Basiselement (28) aus entlang der Mantelfläche in Richtung der Spitze erstreckt, und bevorzugt mindestens drei solcher Rippen (32) um die Mantelfläche herum gleich verteilt angeordnet sind.

6. System nach Anspruch 5,
**dadurch gekennzeichnet, dass**
die oder jede Rippe (32) in einem Abstand zu der Spitze endet.

7. System nach Anspruch 5 oder 6,
**dadurch gekennzeichnet, dass**
im Bereich der oder jeder Rippe (32) eine Durchleitöffnung (36) in dem Basiselement (28) vorgesehen ist und insbesondere beidseitig der Rippe (32) jeweils eine Durchleitöffnung (36) vorgesehen ist.

8. System nach einem der Ansprüche 5 bis 7,
**dadurch gekennzeichnet, dass**
ein in eine Durchleitöffnung (36) mündender Kanal (34) entlang der Rippe (32) verläuft und insbesondere beidseitig der Rippe (32) jeweils ein in eine Durchleitöffnung (36) mündender Kanal (34) verläuft.

9. System nach einem der vorstehenden Ansprüche,
**dadurch gekennzeichnet, dass**
das Druckmittel fünf Extraktionsdorne (24) umfasst, insbesondere von denen vier in den Ecken eines Quadrats angeordnet sind und ein fünfter im Zentrum des Quadrats angeordnet ist.

10. System nach Anspruch 9,
**dadurch gekennzeichnet, dass**
die Diagonalen des durch die Extraktionsdorne (24) aufgespannten Quadrats kürzer sind als eine maximale Diagonale oder ein maximaler Durchmesser der zur Extraktionseinrichtung (16) weisenden Wand (12b) der Portionskapsel (10).

11. System nach einem der vorstehenden Ansprüche,
**dadurch gekennzeichnet, dass**
die Portionskapsel (10) eine im Wesentlichen kubische oder quaderförmige Grundform aufweist.

12. System nach einem der vorstehenden Ansprüche,
**dadurch gekennzeichnet, dass** zumindest die der Extraktionseinrichtung (16) zugewandte Wand (12b) der Portionskapsel (10) aus einem Kunststoffmaterial gebildet ist und insbesondere alle Wände (12) der Portionskapsel (10) aus einem und bevorzugt demselben Kunststoffmaterial gebildet sind.

13. Extraktionsgerät zur Zubereitung eines Brüherzeugnisses aus einem in einer Portionskapsel (10) enthaltenen Extraktionsgut, umfassend eine Injektionseinrichtung (14) zum Einleiten einer Brühflüssigkeit in die Portionskapsel (10) und eine Extraktionseinrichtung (16) zum Ausleiten eines Extraktionsprodukts aus der Portionskapsel (10), wobei die Injektionseinrichtung (14) und die Extraktionseinrichtung (16) zwischen sich einen Aufnahmeraum (18) für die Portionskapsel (10) definieren und zum Einsetzen der Portionskapsel (10) in den Aufnahmeraum (18) relativ auseinander bewegbar und zum Fixieren der Portionskapsel (10) relativ aufeinander zu bewegbar sind,
wobei
die Extraktionseinrichtung (16) ein Druckmittel aufweist, durch welches eine der Extraktionseinrichtung (16) zugewandte Wand (12b) der in den Aufnahmeraum (18) eingesetzten Portionskapsel (10) zur Kompaktierung des in der Portionskapsel (10) enthaltenen Extraktionsguts in Richtung Kapselinneres eindrückbar ist, bevor die Injektionseinrichtung (14) Brühflüssigkeit in die Portionskapsel (10) einleitet, **dadurch gekennzeichnet, dass** das Druckmittel wenigstens einen Extraktionsdorn (24) der Extraktionseinrichtung (16) umfasst, welcher eine pyramiden- oder kegelförmige Grundform besitzt und eine Mantelfläche aufweist, die sich von einem Basiselement (28) zu einer der Injektionseinrichtung (14) zugewandten Spitze des Extraktionsdorns (24) erstreckt, wobei der Extraktionsdorn ferner eine Verbreiterung, insbesondere eine Schulter, im Bereich seiner Spitze, aufweist.

14. Verfahren zum Zubereiten eines Brüherzeugnisses aus einem Extraktionsgut, bei dem eine das Extraktionsgut enthaltende Portionskapsel (10) in einen Aufnahmeraum (18) eines Extraktionsgeräts eingesetzt wird, welcher zwischen einer Injektionseinrichtung (14) und einer Extraktionseinrichtung (16) des Extraktionsgeräts definiert wird,
wobei
eine der Extraktionseinrichtung (16) zugewandte Wand (12b) der in den Aufnahmeraum (18) eingesetzten Portionskapsel (10) zur Kompaktierung des in der Portionskapsel (10) enthaltenen Extraktionsguts durch ein Druckmittel der Extraktionseinrichtung (16) in Richtung Kapselinneres eingedrückt wird, bevor durch die Injektionseinrichtung (14) Brühflüssigkeit in die Portionskapsel (10) eingeleitet wird, **dadurch gekennzeichnet, dass** das Druckmittel wenigstens einen Extraktionsdorn (24) der Extraktionseinrichtung (16) umfasst.

## Claims

1. A system for preparing a brewed product with
a portion capsule (10) comprising an extraction material and with
an extraction appliance for preparing the brewed product from the extraction material contained in the portion capsule (10), wherein the extraction appliance comprises an injection device (14) for introducing a brewing fluid into the portion capsule (10) and an extraction device (16) for discharging an extraction product out of the portion capsule (10), wherein the injection device (14) and the extraction device (16) between them define a receiving space (18) for the portion capsule (10) and can be moved apart in a relative manner for inserting the portion capsule (10) into the receiving space (18) and can be moved to one another in a relative manner for fixing the portion capsule (10),
wherein
the extraction device (16) comprises a pressing means, by way of which a wall (12b) of the portion capsule (10) inserted into the receiving space (18), said wall facing the extraction device (16), can be pressed in in the direction of the capsule interior, for compacting the extraction material contained in the portion capsule, before the injection device (14) introduces brewing fluid into the portion capsule (10), **characterised in that** the pressing means comprises at least one extraction spike (24) of the extraction device (16).

2. A system according to claim 1, **characterised in that** the pressing means is a passive component which presses in the wall of the portion capsule (10), when the injection device (14) and the extraction device (16) are moved to one another for fixing the portion capsule (10).

3. A system according to claim 1 or 2, **characterised in that** the extraction spike (24) has a pyramid-like or cone-like basic shape and comprises a lateral surface which extends from a base element (28) to a tip of the extraction spike (24) which faces the injection device (14).

4. A system according to one of the preceding claims, **characterised in that** the extraction spike (24) comprises a widening, in particular a shoulder, in the region of its tip.

5. A system according to claim 4, **characterised in that** the extraction spike (24) comprises at least one projecting rib (32) which extends from the base element (28) along the lateral surface in the direction of the tip, and preferably at least three such ribs (32) are arranged in a uniformly distributed manner around the lateral surface.

6. A system according to claim 5, **characterised in that** the rib or each rib (32) ends at a distance to the tip.

7. A system according to claim 5 or 6, **characterised in that** a passage opening (36) is provided in the base element (28), in the region of the rib or each rib (32), and in particular a passage opening (36) is provided in each case on both sides of the rib (32).

8. A system according to one of the claims 5 to 7, **characterised in that** a channel (24) which runs out into a passage opening (36) runs along the rib (32), and in particular in each case a channel (34) running out into a passage opening (36) runs on both sides of the rib (32).

9. A system according to one of the preceding claims, **characterised in that** the pressing means comprises five extraction spikes (24), in particular of which four are arranged in the corners of a square, and a fifth one is arranged in the centre of the square.

10. A system according to claim 9, **characterised in that** the diagonals of the square which is spanned by the extraction spikes (24) are shorter than a maximal diagonal or a maximal diameter of the wall (12b) of the portion capsule (10) which faces the extraction device (16).

11. A system according to one of the preceding claims, **characterised in that** the portion capsule (10) has an essentially cubic or cuboid basic shape.

12. A system according to one of the preceding claims, **characterised in that** at least the wall (12b) of the portion capsule (10) which faces the extraction device (16) is formed from a plastic material, and in particular all walls (12) of the portion capsule (10) are formed from one and preferably the same plastic material.

13. An extraction appliance for preparing a brewed product from an extraction material contained in a portion capsule (10), comprising an injection device (14) for introducing a brewing fluid into the portion capsule (10), and an extraction device (16) for discharging an extraction product out of the portion capsule (10), wherein the injection device (14) and the extraction device (16) between them define a receiving space (18) for the portion capsule (10) and can be moved apart in a relative manner for inserting the portion capsule (10) into the receiving space (18) and can be moved to one another in a relative manner for fixing the portion capsule (10),
wherein
the extraction device (16) comprises a pressing means, by way of which a wall (12b) of the portion capsule (10) inserted into the receiving space (18), said wall facing the extraction device (16), can be pressed in in the direction of the capsule interior, for compacting the extraction material contained in the portion capsule (10), before the injection device (14) introduces brewing fluid into the portion capsule (10), **characterised in that** the pressing means composes at least one extraction spike (24) of the extraction device (16), said extraction spike (24) has a pyramid-like or cone-like basic shape and comprises a lateral surface which extends from a base element (28) to a tip of the extraction spike (24) which faces the injection device (14), wherein the extraction spike further comprises a widening, in particular a shoulder, in the region of its tip.

14. A method for preparing a brewed product from an extraction material, with which a portion capsule (10) containing the extraction material is inserted into a receiving space (18) of an extraction appliance, said receiving space being defined between an injection device (14) and an extraction device (16),
wherein
a wall (12b) of the portion capsule (10) inserted into the receiving space (10), said wall facing the extraction device (16), is pressed in in the direction of the capsule inferior by way of at least one extraction spike (24) of the extraction device (16), for compacting the extraction material contained in the portion capsule (10), before brewing fluid is introduced into the portion capsule (10) by way of the injection device (14), **characterised in that** the pressing means comprises at least one extraction spike (24) of the extraction device (16).

## Revendications

1. Système de préparation d'un produit ébouillanté avec :
une capsule de portion (10) contenant une matière d'extraction ;
un appareil d'extraction pour préparer le produit ébouillanté à partir du produit d'extraction contenu dans la capsule de portion (10), l'appareil d'extraction comprenant un dispositif d'injection (14) pour introduire un fluide ébouillanté dans la capsule de portion (10) et un dispositif d'extraction (16) pour évacuer un produit d'extraction hors de la capsule de portion (10), le dispositif d'injection (14) et le dispositif d'extraction (16) définissant entre eux une chambre de réception (18) pour la capsule de portion (10) et pouvant être déplacés de façon à s'éloigner l'un de l'autre pour insérer la capsule de portion (10) dans la chambre de réception (18) et pouvant être déplacés l'un vers l'autre pour fixer la capsule de portion (10) ;
le dispositif d'extraction (16) comportant un moyen de pression à travers lequel une paroi (12b) orientée vers le dispositif d'extraction (16) de la capsule de portion (10) insérée dans la chambre de réception (18) peut être compressée pour compacter la matière d'extraction contenu dans la capsule de portion en direction de l'intérieur de la capsule, avant que le dispositif d'injection (14) introduise le fluide ébouillanté dans la capsule de portion (10), **caractérisé en ce que** le moyen de pression comprend au moins un mandrin d'extraction (24) du dispositif d'extraction (16).

2. Système selon la revendication 1, **caractérisé en ce que** le moyen de pression est un composant passif comprimant la paroi de la capsule de portion (10) lorsque le dispositif d'injection (14) et le dispositif d'extraction (16) sont déplacés l'un vers l'autre pour fixer la capsule de portion (10).

3. Système selon la revendication 1 ou 2, **caractérisé en ce que** le mandrin d'extraction (24) présente une forme de base pyramidale ou conique et comporte une surface d'enveloppe s'étendant d'un élément de base (28) jusqu'à une pointe du mandrin d'extraction (24) orientée vers le dispositif d'injection (14).

4. Système selon l'une quelconque des revendications précédentes, **caractérisé en ce que** le mandrin d'extraction (24) comporte un élargissement, notamment un épaulement, dans la région de sa pointe.

5. Système selon la revendication 4, **caractérisé en ce que** le mandrin d'extraction (24) comporte au moins une nervure (32) saillante s'étendant à partir de l'élément de base (28) le long de la surface d'enveloppe en direction de la pointe et de façon préférée au moins trois telles nervures (32) réparties de façon régulière sont disposées autour de la surface d'enveloppe.

6. Système selon la revendication 5, **caractérisé en ce que** la ou les nervures (32) prennent fin à une certaine distance de la pointe.

7. Système selon la revendication 5 ou 6, **caractérisé en ce que** dans la région de la ou des nervures (32), une ouverture traversante (36) est prévue dans l'élément de base (28) et que respectivement une ouverture traversante (36) est notamment prévue des deux côtés de la nervure (32).

8. Système selon l'une quelconque des revendications 5 à 7, **caractérisé en ce qu'**un canal (34) débouchant dans une ouverture traversante (36) s'étend le long de la nervure (32) et que notamment respectivement un canal (34) débouchant dans une ouverture traversante (36) s'étend des deux côtés de la nervure (32).

9. Système selon l'une quelconque des revendications précédentes, **caractérisé en ce que** le moyen de pression comprend cinq mandrins d'extraction (24) parmi lesquels notamment quatre sont disposés dans les coins d'un carré et un cinquième est disposé au centre du carré.

10. Système selon la revendication 9, **caractérisé en ce que** les diagonales du carré formé par les mandrins d'extraction (24) sont plus courtes qu'une diagonale maximale ou un diamètre maximal de la paroi (12b), orientée vers le dispositif d'extraction (16), de la capsule de portion (10).

11. Système selon l'une quelconque des revendications précédentes, **caractérisé en ce que** la capsule de portion (10) présente une forme de base pour l'essentiel cubique ou en forme de parallélépipède rectangle.

12. Système selon l'une quelconque des revendications précédentes, **caractérisé en ce qu'**au moins la paroi (12b), orientée vers le dispositif d'extraction (16), de la capsule de portion (10) est formée à partir d'une matière plastique et notamment toutes les parois (12) de la capsule de portion (10) sont formées à partir d'une matière plastique, de manière préférée la même matière plastique.

13. Appareil d'extraction pour préparer un produit ébouillanté à partir d'une matière d'extraction contenu dans une capsule de portion (10), comprenant un dispositif d'injection (14) pour introduire un fluide ébouillanté dans la capsule de portion (10) et un dispositif d'extraction (16) pour évacuer un produit d'extraction hors de la capsule de portion (10), le dispositif d'injection (14) et le dispositif d'extraction (16) définissant entre eux une chambre de réception (18) pour la capsule de portion (10) et pouvant être déplacés de façon à s'éloigner l'un de l'autre pour insérer la capsule de portion (10) dans la chambre de réception (18) et pouvant être déplacés l'un vers l'autre pour fixer la capsule de portion (10),
le dispositif d'extraction (16) comportant un moyen de pression à travers lequel une paroi (12b), orientée vers le dispositif d'extraction (16), de la capsule de portion (10) insérée dans la chambre de réception (18) peut être compressée en direction de l'intérieur de la capsule pour compacter le produit d'extraction contenu dans la capsule de portion (10), avant que le dispositif d'injection (14) introduise le fluide ébouillanté dans la capsule de portion (10), **caractérisé en ce que** le moyen de pression comprend au moins un mandrin d'extraction (24) du dispositif d'extraction (16) présentant une forme de base pyramidale ou conique et une surface d'enveloppe s'étendant d'un élément de base (28) jusqu'à une pointe du mandrin d'extraction (24) orientée vers le dispositif d'injection (14), le mandrin d'extraction comportant en outre un élargissement, notamment un épaulement, dans la région de sa pointe.

14. Procédé de préparation d'un produit ébouillanté à partir d'une matière d'extraction, dans lequel une capsule de portion (10) contenant la matière d'extraction est insérée dans une chambre de réception (18) d'un appareil d'extraction définie entre un dispositif d'injection (14) et un dispositif d'extraction (16) de l'appareil d'extraction,
une paroi (12b), orientée vers le dispositif d'extraction (16), de la capsule de portion (10) insérée dans la chambre de réception (18) pouvant être compressée pour compacter la matière d'extraction contenu dans la capsule de portion (10) à travers un moyen de pression du dispositif d'extraction (16), en direction de l'intérieur de la capsule, avant que le dispositif d'injection (14) introduise un fluide ébouillanté dans la capsule de portion (10), **caractérisé en ce que** le moyen de pression comprend au moins un mandrin d'extraction (24) du dispositif d'extraction (16).
